# EUROPÄISCHE PATENTSCHRIFT

(11) **EP 2 568 087 B1**
(45) Veröffentlichungstag und Bekanntmachung des Hinweises auf die Patenterteilung: **02.10.2019**
(21) Anmeldenummer: 12005836.7
(22) Anmeldetag: 11.08.2012
(51) Int. Cl.: E03C 1/30, F16K 11/044

(54) **Sanitärarmatur**
Sanitary fittings
Armature sanitaire

(30) Priorität: 07.09.2011 DE 102011112744
(43) Veröffentlichungstag der Anmeldung: 13.03.2013
(73) Patentinhaber: Hansa Armaturen GmbH, 70567 Stuttgart (DE)
(72) Erfinder: Harsch, Martin, 74395 Mundelsheim (DE)
(74) Vertreter: Ostertag & Partner Patentanwälte mbB

(56) Entgegenhaltungen:
- WO-A1-01/90615
- DE-A1- 3 713 296
- FR-A1- 2 444 872

## Beschreibung

Die Erfindung betrifft eine Sanitärarmatur nach dem Oberbegriff des Anspruchs 1.

Sanitärarmaturen der oben genannten Art sind in unterschiedlichster Ausgestaltung und großer Anzahl auf dem Markt; eines druckschriftlichen Nachweises hierfür bedarf es nicht. Bei diesen bekannten Sanitärarmaturen werden die Mittel im Auslauf, welche die dortigen verschiedenen Wasserwege voneinander trennen, durch angegossene Trennwände gebildet. Dies bedeutet, dass zur Herstellung des Auslaufs im Allgemeinen mehrere Kerne benötigt werden, was den Herstellungsaufwand erhöht. Außerdem sind die angegossenen Trennwände teilweise fehlerhaft, so dass sich Leckagen zwischen den verschiedenen voneinander zu trennenden Wasserwegen ergeben.

Aus der WO 01/90615 A1 ist eine Sanitärarmatur bekannt, bei welcher die Mittel im Auslauf der Sanitärarmatur, welche die dortigen verschiedenen Wasserwege voneinander trennen, durch eine im Wesentlichen zylindrische Hülse verwirklicht sind, die an den Wasserauslauf angegossen ist. In dieser angegossenen Hülse ist das eigentliche Umschaltventil aufgenommen, welches zwischen einer Verbindung zur Wasserauslauföffnung und einem Brausenanschluss umschaltet.

Ferner ist aus der FR 2 444 872 A1 eine Spültischarmatur bekannt, bei welcher in einem unteren Bereich der Armatur ein druckgesteuertes automatisches Umschaltventil zwischen einem Brausekopf und der Wasserauslauföffnung angeordnet ist.

Aufgabe der vorliegenden Erfindung ist es, eine Sanitärarmatur der eingangs genannten Art so auszugestalten, dass sie preiswerter und mit weniger Fehlern hergestellt werden kann.

Diese Aufgabe wird erfindungsgemäß durch eine Sanitärarmatur nach Anspruch 1 gelöst.

Erfindungsgemäß wird also die Aufgabe der Trennung der verschiedenen Wasserwege in dem Auslauf von dem Umstellventil selbst übernommen. Dies hat den Vorteil, dass die kompliziertere Formgestaltung, die zur Erzielung der Wasserwegtrennung erforderlich ist, an dem Umstellventil erfolgt, dessen Gehäuse im Allgemeinen als Kunststoffteil auch in komplizierter Form kostengünstig gespritzt werden kann. Darüber hinaus ist die Gefahr von Leckagen durch das Umstellventil hindurch praktisch eliminiert. Ausserdem wird eine Beeinträchtigung der Durchflussquerschnitte des Umstellventils vermieden, da im gegossenen Auslauf keine Trennwände mehr im Wege stehen.

Erfindungsgemäß sind ferner an der Außenmantelfläche des Gehäuses des Umstellventils in axialem Abstand voneinander zwei Ringbünde ausgebildet, die mit Hilfe einer Dichtung eine Abdichtung des Umstellventils gegen die obere bzw. untere Wand des Auslaufs bewirken.

Alle Dichtungen sind dabei als einstückiges Formteil ausgebildet, was die Herstellung verbilligt und die Lagerhaltung vereinfacht.

Zweckmäßigerweise sind die Dichtflächen des Umstellventils und/oder an den Innenflächen des Auslaufs an erhabenen Rippen ausgebildet. Dies verbessert die Dichtfunktion und erleichtert, wo dies erforderlich ist, eine mechanische Bearbeitung der Dichtflächen, wie sie insbesondere an den Innenflächen des Auslaufs zweckmäßig ist.

Zwischen den Dichtflächen des Umstellventils und den Dichtflächen an der Innenfläche des Auslaufs sollte mindestens eine Dichtung angeordnet sein.

Besonders vorteilhaft ist, wenn zumindest zwei Dichtflächen des Umstellventils in einer Richtung aufeinander zukonvergieren und die mit diesen zusammenwirkenden Dichtflächen an der Innenfläche des Auslaufs eine entsprechende Konvergenz aufweisen. Grund hierfür ist, dass das Umstellventil bei der Montage der Sanitärarmatur im Allgemeinen in axialer Richtung in den Auslauf eingeschoben wird. Wenn Dichtflächen des Umstellventils und die entsprechenden Dichtflächen an der Innenfläche des Auslaufs in dieser Richtung aufeinander zukonvergieren, können die Dichtflächen bzw. die zwischen diesen liegende Dichtung zuverlässig angedrückt werden, was die Dichtwirkung verbessert.

Das Umstellventil kann einen verschiebbaren Doppelventilkegel umfassen, der in einer ersten Position an einem ersten Ventilsitz anliegt, der in dem Gehäuse des Umstellventils ausgebildet ist, und in einer zweiten Position an einem zweiten Ventilsitz anliegt, der an dem als Anschlussnippel gestalteten Brauseanschluss vorgesehen ist. Die Verwendung des Anschlussnippels als zweiter Ventilsitz vereinfacht die Formgebung des Gehäuses des Umstellventils. Zudem kann der Anschlussnippel der Befestigung des Umstellventils dienen.

Ein Ausführungsbeispiel der Erfindung wird nachfolgend anhand der Zeichnung näher erläutert; es zeigen
- Figur 1: einen Vertikalschnitt durch den Auslaufbereich einer Sanitärarmatur;
- Figur 2: einen Schnitt gemäß Linie II-II von Figur 1;
- Figur 3: in anderem Maßstab und perspektivisch ein Umstellventil mit einem Anschlussnippel, welche bei der Sanitärarmatur der Figuren 1 und 2 Verwendung finden;
- Figur 4: eine andere Perspektive des Umstellventils und des Anschlussnippels der Figur 3.

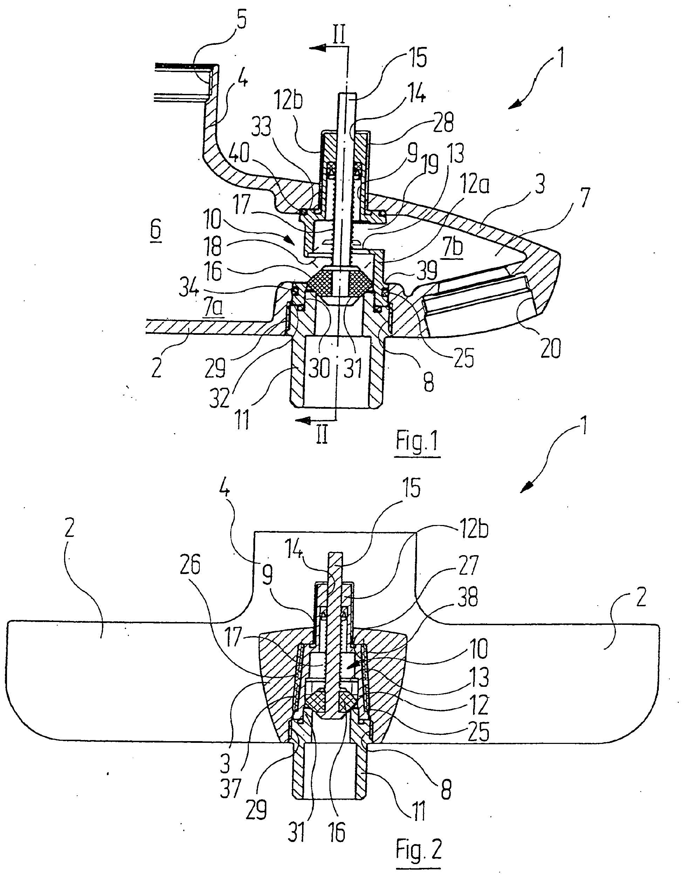

Zunächst wird auf die Figuren 1 und 2 Bezug genommen. Dargestellt ist eine sanitäre Auslaufarmatur in Gestalt einer Wannenfüllarmatur, die insgesamt das Bezugszeichen 1 trägt. Auf die genaue Art der Sanitärarmatur kommt es jedoch im vorliegenden Zusammenhang nicht an. Zwar wird es sich in dem meisten Fällen um eine Mischarmatur handeln; unbedingt notwendig ist dies jedoch nicht.

Die Wannenfüllarmatur 1 besitzt ein durch Gießen hergestelltes Gehäuse 2, an welches einstückig ein Auslauf 3 angeformt ist. An das Gehäuse 2, welches in Figur 1 nur teilweise dargestellt ist, ist ebenfalls einstückig ein hohlzylindrischer Kragen 4 angegossen, der eine obere Montageöffnung 5 besitzt. Über die Montageöffnung 5 kann von oben her in bekannter Weise in den Innenraum 6 des Gehäuses 2 eine Steuerkartusche eingesetzt werden, in der die zum Steuern des Wasserflusses, also zur Einstellung von Menge und Temperatur des durchströmenden Wassers, dienenden Steuerelemente untergebracht sind. Diese Steuerkartusche ist in der Zeichnung nicht dargestellt. Jede Bauweise ist hier denkbar. Es genügt zu wissen, dass aus dieser Steuerkartusche Wasser austreten und in den Innenraum 7 des Auslaufs 3 überströmen kann. Der Innenraum 7 des Auslaufs 3 kommuniziert großflächig mit dem Innenraum 6 des restlichen Gehäuses 2, wie dies insbesondere der Figur 1 zu entnehmen ist.

Der Auslauf 3 der Wannenfüllarmatur 1 wird in der Unterwand sowie der Oberwand von koaxialen im Querschnitt kreisförmigen Öffnungen, insbesondere Bohrungen, 8, 9 durchstoßen. Diese Öffnungen 8, 9 dienen in einer weiter unten näher geschilderten Weise zur Montage eines Umstellventils, welches insgesamt das Bezugszeichen 10 trägt, sowie eines Anschlussnippels 11, der mit einer Brause (nicht dargestellt), insbesondere über einen Brauseschlauch mit einer Handbrause, verbunden werden kann.

Das Umstellventil 10 besitzt ein Umstellventilgehäuse 12, das etwa in der Mitte seiner Höhe einen durch eine umlaufende Stufe gebildeten ersten Ventilsitz 13 aufweist.

In einer Bohrung 14, welche den Hals 12b des Umstellventilgehäuses 12 koaxial durchsetzt, ist eine Betätigungsstange 15 verschiebbar geführt. Diese Betätigungsstange 15 trägt an ihrem unteren, unterhalb des ersten Ventilsitzes 13 liegenden Ende einen Doppelventilkegel 16. Eine Druckfeder 17, die zwischen einer Stufe der Bohrung 14 und dem Doppelventilkegel 16 verspannt ist, drückt den Doppelventilkegel 16 nach unten. Die Betätigungsstange 15 ragt nach oben aus dem Umstellventil 10 heraus und wird bei der Endmontage der Sanitärarmatur 1 mit einem Handgriff (nicht dargestellt) versehen.

Der Raum im Umstellventil 10, der unterhalb des ersten Ventilsitzes 13 liegt, ist über ein erstes Fenster 18 mit demjenigen Bereich 7a des Innenraums 7 des Auslaufs 3 verbunden, welcher direkt mit dem Innenraum 6 des restlichen Gehäuses 2 kommuniziert. In ähnlicher Weise besitzt das Umstellventil 10 oberhalb des ersten Ventilsitzes 13 ein zweites Fenster 19, welches jedoch, abgesehen von dem Höhenversatz, dem ersten Fenster 18 diametral gegenüberliegt und den oberhalb des ersten Ventilsitzes 13 liegenden Innenraum des Umstellventils 10 mit dem Bereich 7b des Innenraums 7 verbindet, welcher mit der Auslauföffnung 20 des Auslaufs 3 kommuniziert. Die Bereiche 7a und 7b des Innenraums 7 des Auslaufs 3 sind durch das Umstellventil 10 in einer weiter unten beschriebenen Weise derart voneinander getrennt, dass eine Wasserströmung zwischen diesen Bereichen nur durch das Umstellventil 10 hindurch, nicht jedoch außen an diesem vorbei erfolgen kann.

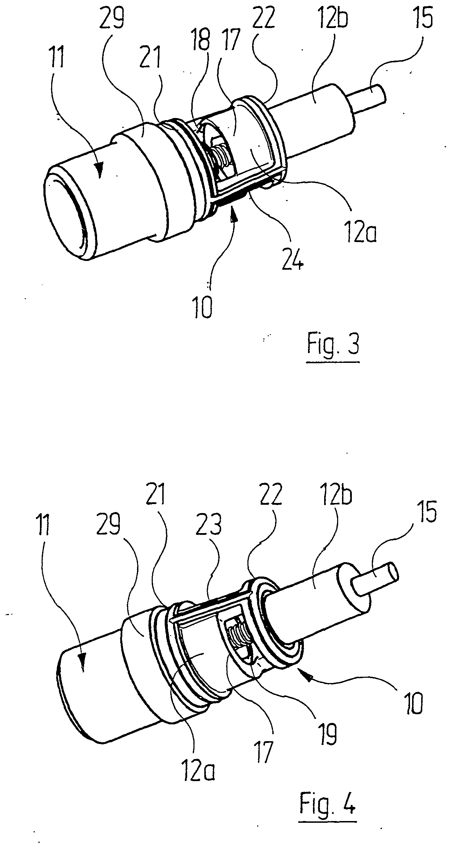

Die Art und Weise, wie diese Trennung der beiden Bereiche 7a und 7b erfolgt, ist am besten den Figuren 2 bis 4 zu entnehmen. Wie die Figuren 3 und 4 zeigen, trägt der Hauptbereich 12a des Umstellventils 10 unterhalb des ersten Fensters 18 einen ersten radial überstehenden Ringbund 21 und oberhalb des zweiten Fensters 19 einen zweiten, ebenfalls radial überstehenden Ringbund 22. Die beiden Ringbünde 21, 22 sind durch ebenfalls an den Hauptbereich 12a angeformte und jeweils beidseits der Fenster 18, 19 liegende Stege 23, 24 miteinander verbunden. Der Radius des oberen Ringbunds 22 ist etwas geringer als derjenige des unteren Ringbunds 21, so dass die Stege 23, 24 nicht exakt achsparallel verlaufen sondern nach oben etwas aufeinander zu geneigt sind. Dies ist auch der Figur 2 zu entnehmen.

In Nuten, die in die Ringbünde 21, 22 sowie in die Stege 23, 24 eingebracht und nicht eigens mit Bezugszeichen versehen sind, ist eine einstückige, entsprechend geformte Dichtung 25 eingelegt. Die mit der Dichtung 25 zusammenwirkenden Flächen der Nuten in den Ringbünden 21, 22 sowie in den Stegen 23, 24 sind somit in der in den Ansprüchen benutzten Terminologie Dichtflächen 33, 34 bzw. 35, 36 an der Außenseite des Umstellventils 10.

Der Innenraum 7 des Auslaufs 3 weist keine Trennwände auf, welche unterschiedliche Wasserwege innerhalb des Auslaufs 3 voneinander trennen würden. Vielmehr sind die Begrenzungswände des Innenraums 7 weitgehend glatt. Eine Ausnahme bilden allerdings zwei auf gegenüberliegenden Seitenwänden des Innenraums 7 vorgesehene etwas erhabene Rippen 26, 27, deren nach innen weisende Stirnflächen so bearbeitet sind, dass sie sich als Dichtflächen 37, 38 eignen. Die Rippen 26, 27 neigen sich unter dem gleichen Winkel und in der gleichen Richtung aufeinander zu wie die Stege 23, 24 des Umstellventils 10 bzw. die in diesen Stegen 23, 24 verlaufenden Bereiche der Dichtung 25.

Das Umstellventil 10 wird von unten her, also durch die Öffnung 8 in der unteren Wand des Auslaufs 3 in dem Auslauf montiert, wobei der Hals 12b unter Zwischenschaltung einer Zierhaube 28 durch die Öffnung 9 in der oberen Wand des Auslaufs 3 hindurchgeführt wird. Der Bereich der Dichtung 25, der in dem unteren Ringbund 21 verläuft, legt sich dabei an die als Dichtfläche 39 dienende Umfangswand der Öffnung 8, der Bereich der Dichtung 25, der in dem oberen Ringbund 22 verläuft, an einer als Dichtfläche 40 dienenden Stufe der Öffnung 9 und die Bereiche, die in den Stegen 23 und 24 verlaufen, an den Dichtflächen 37, 38 der Rippen 26, 27 der Innenwand des Auslaufs 3 an. Auf diese Weise wird die oben schon angesprochene Trennung der beiden Bereiche 7a, 7b des Innenraums 7 des Auslaufs 3 durch das Umstellventil 10 erzielt.

Der Anschlussnippel 11 ist mit einem Außengewinde 29 in den unteren Bereich der Öffnung 8 in der unteren Wand des Auslaufs 3 eingeschraubt. Ein im Durchmesser verringerter Hals 30 am oberen Ende des Anschlussnippels 11 greift von unten her in das Umstellventilgehäuse 12 ein und bildet oben einen zweiten Ventilsitz 31, der ebenfalls mit dem Doppelventilkegel 16 zusammenwirkt. Eine den Hals 30 umgebende ringförmige Stirnfläche 32 des Anschlussnippels 11 liegt von unten her an dem Umstellventilgehäuse 12 an und drückt dieses im montierten Zustand des Anschlussnippels 11 nach oben. Eine Dichtung, die zur Entlastung der Zeichnung nicht mit einem eigenen Bezugszeichen versehen ist, liegt in der ringförmigen Stirnfläche 32 ein und stellt eine Abdichtung des Anschlussnippels 11 gegen das Umstellventilgehäuse 12 dar.

Die Funktion der oben beschriebenen Sanitärarmatur 1 ist wie folgt:
Es sei angenommen, dass die Steuerkartusche, welche in dem Innenraum 6 des Gehäuses 2 eingesetzt zu denken ist, geöffnet ist, so dass aus dieser Wasser in den Innenraumbereich 7a des Auslaufs 3 strömen kann. In Figuren 1 und 2 ist derjenige Zustand des Umstellventils 10 gezeichnet, in dem der Benutzer der Sanitärarmatur keine Kraft auf die Betätigungsstange 15 ausübt. Die Druckfeder 17 drückt daher den Doppelventilkegel 16 nach unten gegen den unteren Ventilsitz 31. Jetzt kann Wasser durch das untere Fenster 18 im Umstellventilgehäuse 12 nach oben am ersten Ventilsitz 13 vorbei und durch das obere Fenster 19 in den Innenraumbereich 7b und von dort zur Auslauföffnung 20 strömen. Ein Vorbeiströmen des Wassers an dem Umstellventil 10 auf anderem Weg ist durch die Stege 23, 24 und die Rippen 26, 27 sowie die Dichtung 25 unterbunden.

Wünscht der Benutzer einen Wasserstrom zur Handbrause, so zieht er mit Hilfe der Betätigungsstange 15 bzw. dem daran angebrachten Handgriff den Doppelventilkegel 16 nach oben gegen den ersten Ventilsitz 13, wodurch der zweite Ventilsitz 31 freigegeben wird. Jetzt ist der Weg für das Wasser aus dem Innenraumbereich 7a des Auslaufs 3 frei durch das untere Fenster 18 im Umstellventilgehäuse 12 zum Anschlussnippel 11 und von dort über den Brauseschlauch zur Handbrause.

## Patentansprüche

1. Sanitärarmatur (1) mit
a) einem gegossenen Auslauf (3), der eine Wasserauslauföffnung (20) aufweist;
b) einem an dem Auslauf (3) angeordneten Brauseanschluss (11) ;
c) einem in dem Auslauf (3) angeordneten handbetätigten Umstellventil (10), welches wahlweise eine Wasserströmung zu dem Wasserauslauf (20) oder zu dem Brauseanschluss (11) freigibt;
d) Mitteln im Auslauf (3), welche die verschiedenen Wasserwege im Auslauf (3) voneinander trennen;
wobei
e) die Mittel zum Trennen der Wasserwege von dem Umstellventil (10) selbst gebildet sind, das hierzu an seiner Außenseite mit Dichtflächen (33, 34, 35, 36) versehen ist, die mit Dichtflächen (37, 38, 39, 40) an der Innenfläche des Auslaufs (3) zusammenwirken;
**dadurch gekennzeichnet, dass**
f) an der Außenmantelfläche des Gehäuses (12) des Umstellventils (10) in axialem Abstand voneinander zwei Ringbünde (21, 22) ausgebildet sind, die mit Hilfe einer Dichtung (25) eine Abdichtung des Umstellventils (10) gegen die obere und untere Wand des Auslaufs (3) bewirken, und dass
g) alle Dichtungen (25) als ein einstückiges Formteil ausgebildet sind.

2. Sanitärarmatur nach Anspruch 1, **dadurch gekennzeichnet,**
**dass** die Dichtflächen (33, 34, 35, 36) des Umstellventils (10) und/oder die Dichtflächen (37, 38, 39, 40) an der Innenfläche des Auslaufs (3) an erhabenen Rippen (23, 24, 26, 27) ausgebildet sind.

3. Sanitärarmatur nach Anspruch 1 oder 2, **dadurch gekennzeichnet, dass** zwischen den Dichtflächen (33, 34, 35, 36) des Umstellventils (10) und den Dichtflächen (37, 38, 39, 40) an der Innenfläche des Auslaufs (3) mindestens eine Dichtung (25) angeordnet ist.

4. Sanitärarmatur nach einem der vorhergehenden Ansprüche,
**dadurch gekennzeichnet, dass** zumindest zwei Dichtflächen (35, 36) des Umstellventils (10) in einer Richtung aufeinander zu konvergieren und die mit diesen zusammenwirkenden Dichtflächen (37, 38) an der Innenfläche des Auslaufs (3) eine entsprechende Konvergenz aufweisen.

5. Sanitärarmatur nach einem der vorhergehenden Ansprüche,
**dadurch gekennzeichnet, dass** das Umstellventil (10) einen verschiebbaren Doppelventilkegel (16) umfasst, der in einer ersten Position an einem ersten Ventilsitz (13) anliegt, der im Gehäuse (12) des Umstellventils (10) ausgebildet ist, und in einer zweiten Position an einem zweiten Ventilsitz (31) anliegt, der an dem als Anschlussnippel gestalteten Brauseanschluss (11) vorgesehen ist.

## Claims

1. A sanitary fitting (1) comprising
a) a cast outlet (3) comprising a water outlet opening (20);
b) a shower connection (11) arranged on the outlet (3);
c) a manually operated switching valve (10) arranged in the outlet (3) which optionally enables a water flow to the water outlet (20) or to the shower connection (11);
d) means in the outlet (3) separating the different water paths in the outlet (3) from each other;
wherein
e) the means for separating the water paths are formed by the switching valve (10) itself, which, for this purpose, on its outside is provided with sealing surfaces (33, 34, 35, 36) cooperating with sealing surfaces (37, 38, 39, 40) on the inner surface of the outlet (3);
**characterised in that**
f) on the outer surface area of the housing (12) of the switching valve (10) in axial distance from each other two annular collars (21, 22) are formed which ensure a sealing of the switching valve (10) by means of a seal (25) against the upper and lower wall of the outlet (3), and that
g) all seals (25) are formed as a single-piece moulded part.

2. The sanitary fitting according to claim 1, **characterised in that** the sealing surfaces (33, 34, 35, 36) of the switching valve (10) and/or the sealing surfaces (37, 38, 39, 40) on the inner surface of the outlet (3) are formed on raised webs (23, 24, 26, 27).

3. The sanitary fitting according to claim 1 or 2, **characterised in that** between the sealing surfaces (33, 34, 35, 36) of the switching valve (10) and the sealing surfaces (37, 38, 39, 40) on the inner surface of the outlet (3) at least one seal (25) is arranged.

4. The sanitary fitting according to any one of the preceding claims, **characterised in that** at least two sealing surfaces (35, 36) of the switching valve (10) converge towards each other in one direction, and the sealing surfaces (37, 38) cooperating with them have a corresponding convergence on the inner surface of the outlet (3).

5. The sanitary fitting according to any one of the preceding claims, **characterised in that** the switching valve (10) comprises a movable double valve cone (16), which, in a first position fits closely to a first valve seat (13), which is formed in the housing (12) of the switching valve (10), and in a second position fits closely to a second valve seat (31) which is provided on the shower connection (11) configured as a connecting nipple.

## Revendications

1. Robinetterie sanitaire (1) comprenant
a) un bec de décharge (3) venu de coulée, muni d'un orifice de sortie d'eau (20) ;
b) un raccord (11) de douchette, situé sur ledit bec de décharge (3) ;
c) une vanne d'inversion (10) à actionnement manuel, logée dans ledit bec de décharge (3) et autorisant, sélectivement, un écoulement d'eau vers la sortie d'eau (20) ou vers le raccord (11) de douchette ;
d) des moyens situés dans le bec de décharge (3) et séparant, les unes des autres, les différentes voies empruntées par l'eau dans ledit bec de décharge (3) ;
sachant que
e) les moyens, affectés à la séparation des voies d'eau, sont constitués par la vanne d'inversion (10) proprement dite qui est pourvue à cette fin, sur sa face extérieure, de surfaces d'étanchement (33, 34, 35, 36) coopérant avec des surfaces d'étanchement (37, 38, 39, 40), à la face intérieure dudit bec de décharge (3) ;
**caractérisée par le fait que**
f) deux collets annulaires (21, 22) sont façonnés, à distance axiale l'un de l'autre, sur la surface de l'enveloppe extérieure du carter (12) de la vanne d'inversion (10) et instaurent, à l'aide d'une garniture d'étanchement (25), une étanchéité de ladite vanne d'inversion (10) contre les parois supérieure et inférieure du bec de décharge (3) ; et **par le fait que**
g) toutes les garnitures d'étanchement (25) sont réalisées sous la forme d'une pièce venue de moulage d'un seul tenant.

2. Robinetterie sanitaire selon la revendication 1, **caractérisée par le fait que** les surfaces d'étanchement (33, 34, 35, 36) de la vanne d'inversion (10), et/ou les surfaces d'étanchement (37, 38, 39, 40) situées à la face intérieure du bec de décharge (3), sont ménagées sur des nervures proéminentes (23, 24, 26, 27).

3. Robinetterie sanitaire selon la revendication 1 ou 2, **caractérisée par le fait qu'**au moins une garniture d'étanchement (25) est interposée entre les surfaces d'étanchement (33, 34, 35, 36) de la vanne d'inversion (10) et les surfaces d'étanchement (37, 38, 39, 40) situées à la face intérieure du bec de décharge (3).

4. Robinetterie sanitaire selon l'une des revendications précédentes, **caractérisée par le fait qu'**au moins deux surfaces d'étanchement (35, 36) de la vanne d'inversion (10) convergent l'une vers l'autre dans une direction et les surfaces d'étanchement (37, 38), situées à la face intérieure du bec de décharge (3) et coopérant avec lesdites surfaces, présentent une convergence correspondante.

5. Robinetterie sanitaire selon l'une des revendications précédentes, **caractérisée par le fait que** la vanne d'inversion (10) inclut un cône obturateur double (16) doué de mobilité qui, en un premier emplacement, est en applique contre un premier siège d'obturation (13) ménagé dans le carter (12) de ladite vanne d'inversion (10) et est en applique, en un second emplacement, contre un second siège d'obturation (31) prévu sur le raccord (11) de douchette configuré en un mamelon de raccordement.
